# EUROPEAN PATENT SPECIFICATION

(11) **EP 3 702 177 B1**
(45) Date of publication and mention of the grant of the patent: **01.05.2024**
(21) Application number: 18886226.2
(22) Date of filing: 30.11.2018
(51) Int. Cl.: B60C 13/00, B60C 11/13

(54) **TIRE**
REIFEN
PNEUMATIQUE

(30) Priority: 08.12.2017 JP 2017236451
(43) Date of publication of application: 02.09.2020
(73) Proprietor: Bridgestone Corporation, Tokyo 104-8340 (JP)
(72) Inventor: IWABUCHI, Sotaro, Tokyo 104-8340 (JP)
(74) Representative: Marks & Clerk LLP
(86) International application number: PCT/JP2018/044302
(87) International publication number: WO 2019/111828

(56) References cited:
- EP-A1- 3 213 936
- WO-A1-2015/133245
- WO-A1-2016/182076
- JP-A- H07 164 831
- JP-A- 2011 235 686
- JP-A- 2016 215 705
- JP-A- 2017 001 440

## Description

### Technical Field

The present invention relates to a tire at which minute projections are formed at the outer surface thereof.

### Background Art

Conventionally, pattern regions having contrast are formed by forming minute projections at the side portions of a tire. For example, International Application Publication No. 2012/131089 discloses a technique that provides large contrast at the side portions of a tire by plural projections that are formed over an entire pattern region. Attention is drawn to the disclosures of JP2016 215 705, EP 3 213 916 and WO2016/182076.

### SUMMARY OF INVENTION

### Technical Problem

A decorative portion at the side portion of a tire has one region where projections are formed. By controlling the reflection of light by the projections, the brightness of this one region is low as compared with the brightness of other regions where light is reflected as is. However, the range of expression of the decorative portion where the projections are formed at a tire is limited by merely lowering the brightness of the one region, at which the projections are formed, to a similar brightness overall.

An object of the present invention is the broadening of the range of expression of a decorative portion having regions where projections are formed at a tire.

### Solution to Problem

A tire relating to the present invention has: a decorative portion that is formed at a tire outer surface and has a base surface; and a plurality of first pattern regions at which a plurality of projections, which project out from the base surface of the decorative portion at a projecting height of from 0.1 [mm] to 1.0 [mm], are formed at intervals of from 0.1 [mm] to 1.0 [mm], wherein the intervals differ from one first pattern region to a next first pattern region. Further, the projections within each first pattern region are connected to one another.

### Advantageous Effects of Invention

In accordance with the present disclosure, the range of expression of a decorative portion having regions where projections are formed at a tire can be broadened.

### BRIEF DESCRIPTION OF DRAWINGS

Fig. 1 is an enlarged side view showing a decorative portion of a tire relating to a first embodiment in the present invention.
Fig. 2(A) is a plan view showing projections that are formed at a medium brightness region of the decorative portion, Fig. 2(B) is a plan view showing projections that are formed at a second low brightness region of the decorative portion, and Fig. 2(C) is a plan view showing projections that are formed at a first low brightness region of the decorative portion.
Fig. 3 is an enlarged plan view showing the projections.
Fig. 4 is a cross-sectional view showing the projections.
Fig. 5 is an enlarged plan view showing the projections that are formed at the first low brightness region.
Fig. 6 is an enlarged side view showing a decorative portion of a tire relating to a second embodiment in the present invention.
Fig. 7 is a perspective view showing a decorative portion that is provided at a groove of a tread, at a tire relating to a third embodiment in the present invention.

### DESCRIPTION OF EMBODIMENTS

### <First Embodiment>

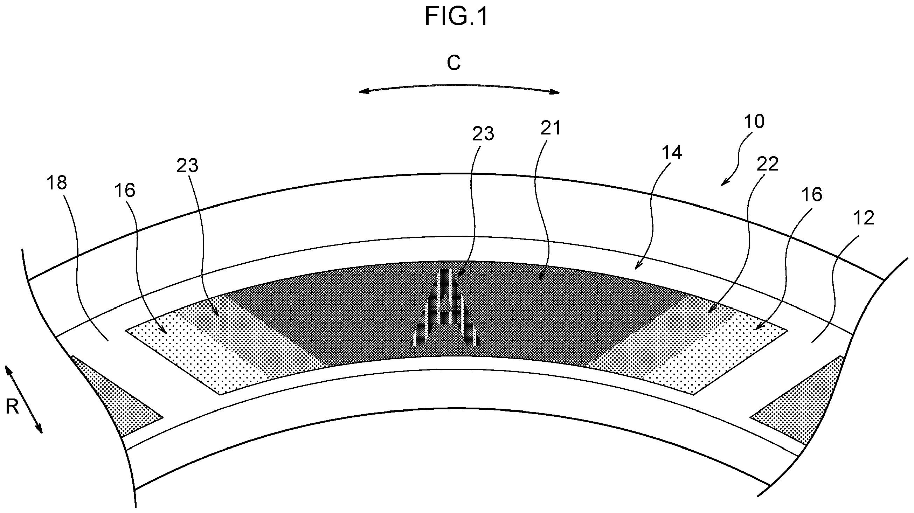

An example of a tire 10 relating to a first embodiment in the present invention is described in accordance with Fig. 1 through Fig. 5. Note that arrow C that is shown in the drawings indicates the tire circumferential direction, arrow R indicates the tire radial direction, and arrow W indicates the tire width direction.

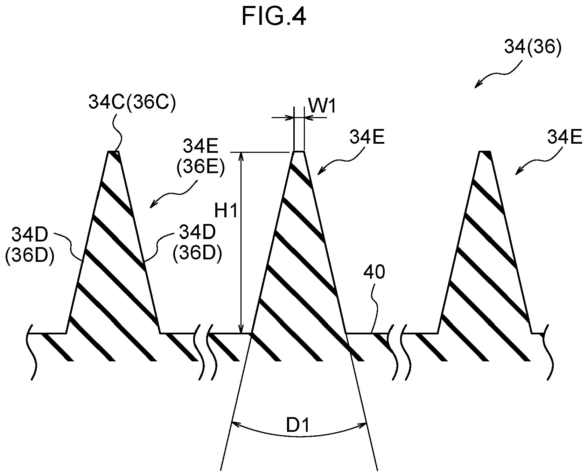

As shown in Fig. 1, decorative portions 14 are formed at a tire side portion 12 that is an example of an outer surface of the tire 10. The decorative portion 14 is, for example, formed in an arcuate shape as seen from the axial direction of the tire 10, and is disposed at an arbitrary position in the tire circumferential direction. Moreover, the decorative portion 14 has a base surface 40 (see Fig. 4). The base surface 40 is recessed with respect to another region 18, which is the region other than the decorative portion 14 at the tire side portion 12 and at which projections and the like are not formed. This base surface 40 structures the bottom surface of the decorative portion 14, and, as seen from the tire circumferential direction, is formed in the shape of a curved surface that is convex toward the outer side in the width direction of the tire 10. In the present embodiment, the base surface 40 is recessed by 0.4 [mm] with respect to the another region 18.

Moreover, a first low brightness region 21, second low brightness regions 22, and a third low brightness region 23, whose brightness is low as compared with the another region 18 and that appear black, are formed at the decorative portion 14 as examples of plural first pattern regions. Thereamong, the brightness of the third low brightness region 23 is the lowest, and the brightness of the second low brightness regions 22 is the highest. The brightness of the first low brightness region 21 is lower than the brightness of the second low brightness regions 22 and higher than the brightness of the third low brightness region 23. Further, medium brightness regions 16 are formed at the decorative portion 14 as an example of second pattern regions. The brightness of the medium brightness regions 16 is low as compared with the brightness of the another region 18, and is high as compared with the brightness of the second low brightness regions 22. Due thereto, the medium brightness region 16 appears gray.

Further, the first low brightness region 21 that is formed at the decorative portion 14 extends in the tire circumferential direction, and the second low brightness regions 22 are disposed adjacent to the tire circumferential direction both end sides of the first low brightness region 21, respectively. Moreover, the medium brightness regions 16 are disposed adjacent to the tire circumferential direction both end sides of the second low brightness regions 22, respectively. The third low brightness region 23 is disposed within the range of the first low brightness region 21. In other words, the third low brightness region 23 is adjacent to the first low brightness region 21 and is surrounded by the first low brightness region 21.

Note that the first low brightness region 21, the second low brightness regions 22, the third low brightness region 23 and the medium brightness regions 16 are formed by providing indentations and projections at portions, which correspond to the first low brightness region 21, the second low brightness regions 22, the third low brightness region 23 and the medium brightness regions 16, of a mold (die) for molding the tire 10. Further, the first low brightness region 21, the second low brightness regions 22, the third low brightness region 23 and the medium brightness regions 16 being disposed further toward the tire radial direction outer side than the tire maximum width portion (the portion where the rectilinear distance between the tire side portions is the maximum), is preferable from the standpoint of visibility in the state in which the tire 10 is mounted to a vehicle.

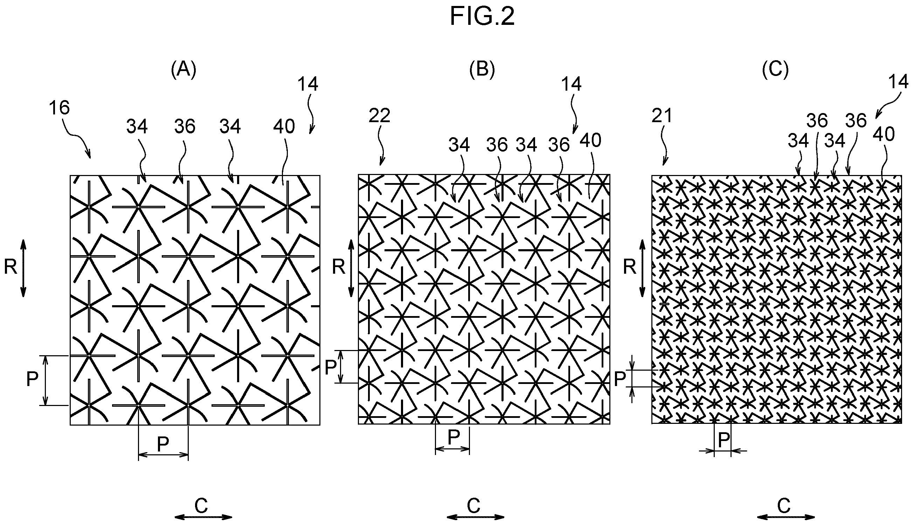

First asterisk projections 34 and second asterisk projections 36, which are examples of projections, are formed so as to be similar to one another at the medium brightness region 16 shown in Fig. 2(A), the second low brightness regions 22 shown in Fig. 2(B), and the first low brightness region 21 shown in Fig. 2(C). Further, interval P between the first asterisk projection 34 and the second asterisk projection 36 that are adjacent to one another varies in accordance with the ratio of similitude. At the medium brightness region 16 and the second low brightness region 22 that are adjacent to one another, the ratio of the intervals P between the first asterisk projection 34 and the second asterisk projection 36 is, for example, from 1.1 to 3.0.

As described above, the shapes of the first asterisk projections 34 and the second asterisk projections 36 are similar at the respective regions. Accordingly, the shapes of the first asterisk projections 34 and the second asterisk projections 36 will be described by using the first low brightness region 21 as an example.

### (First Low Brightness Region 21)

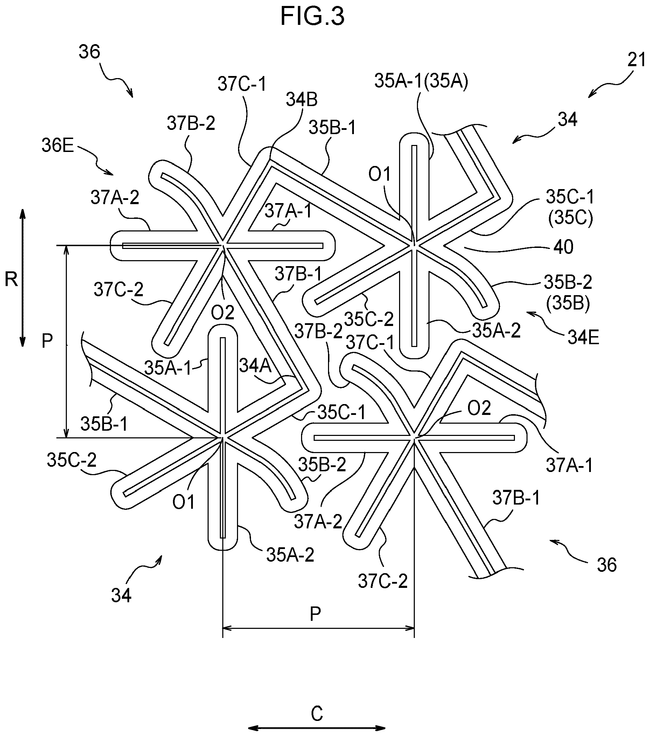

As shown in Fig. 3, the first low brightness region 21 has the plural first asterisk projections 34 and the plural second asterisk projections 36 that project-out from the base surface 40. Further, the first asterisk projections 34 and the second asterisk projections 36 are disposed alternately in the tire circumferential direction and the tire radial direction.

### [First Asterisk Projection 34]

As shown in Fig. 3, as seen from a direction orthogonal to the base surface 40 (from the rotation axial direction of the tire 10 (Fig. 1)), the first asterisk projection 34 is structured from first extending portions 35A-1, 35A-2, second extending portions 35B-1, 35B-2, and third extending portions 35C-1, 35C-2 that extend out in respectively different directions from center O1 that is the base point. Hereinafter, these six extending portions are collectively called the "extending portions 34E". Further, a linear shape that is bent at the center O1 is structured by the one extending portion 34E and the another extending portion 34E (except for the extending portions 34E that extend from the center O1 in directions opposite one another).

The first extending portion 35A-1 and the first extending portion 35A-2 extend out from the center O1 in directions opposite one another, a shape that is continuous in a rectilinear form is structured by the first extending portion 35A-1 and the first extending portion 35A-2. The first extending portion 35A-1 extends from the center O1 toward the tire radial direction outer side, and the first extending portion 35A-2 extends from the center O1 toward the tire radial direction inner side. Further, the first extending portion 35A-1 and the first extending portion 35A-2 are made to be similar lengths. Hereinafter, the first extending portion 35A-1 and the first extending portion 35A-2 collectively are called the "first extending portions 35A".

The second extending portion 35B-1 and the second extending portion 35B-2 extend out from the center O1 in directions opposite one another, and a shape that is continuous in a rectilinear form is structured by the second extending portion 35B-1 and the second extending portion 35B-2. The second extending portion 35B-1 and the second extending portion 35B-2 are inclined with respect to the tire circumferential direction such that the end portions at a tire circumferential direction one side (the left side in the drawing) are positioned at the tire radial direction outer side with respect to the end portions at the another side (the right side in the drawing).

The second extending portion 35B-1 extends out from the center O1 toward the tire circumferential direction one side, and the second extending portion 35B-2 extends out from the center O1 toward the tire circumferential direction another side. Further, the second extending portion 35B-1 is made to be long as compared with the second extending portion 35B-2. Moreover, the distal end side portion of the second extending portion 35B-2 is curved toward the tire radial direction inner side. Hereinafter, the second extending portion 35B-1 and the second extending portion 35B-2 collectively are called the "second extending portions 35B".

The third extending portion 35C-1 and the third extending portion 35C-2 extend out from the center O1 in directions opposite one another, and a shape that is continuous in a rectilinear form is structured by the third extending portion 35C-1 and the third extending portion 35C-2. The third extending portion 35C-1 and the third extending portion 35C-2 are inclined with respect to the tire circumferential direction such that the end portions at the tire circumferential direction one side (the left side in the drawing) are positioned at the tire radial direction inner side with respect to the end portions at the another side (the right side in the drawing).

The third extending portion 35C-1 extends out from the center O1 toward the tire circumferential direction another side, and the third extending portion 35C-2 extends out from the center O1 toward the tire circumferential direction one side. Further, the third extending portion 35C-1 is made to be short as compared with the third extending portion 35C-2. Hereinafter, the third extending portion 35C-1 and the third extending portion 35C-2 collectively are called the "third extending portions 35C".

The six extending portions 34E form angles of 60° respectively with the extending portions 34E adjacent thereto. In other words, the first asterisk projection 34 is a shape in which the six extending portions 34E extend out in a radial form from the center O1.

As shown in Fig. 4, at the extending portion 34E of the first asterisk projection 34, the cross-section in the direction orthogonal to the extending direction is a substantially isosceles triangle shape that has a flat peak surface 34C. Namely, the first asterisk projection 34 has the peak surface 34C and a pair of side surfaces 34D. In the present embodiment, the width (W1 in the drawing) of the peak surface 34C is 0.02 [mm], and the apex angle (D in the drawing) of the first asterisk projection 34 is 26 [degrees]. Further, height (H in the drawing) of the first asterisk projection 34 is a value that is determined in advance and that is from 0.1 [mm] to 1.0 [mm]. If the height of the projections (the projecting height) is less than 0.1 [mm], molding of the projections is difficult, and there is the concern that the brightness cannot be lowered to the extent of being seen as black by damping the incident light. Moreover, by making the height of the projections less than or equal to 1.0 [mm], the difference between the rigidity of the projection portions and the rigidity of the portions at the peripheries of the projections is small, and local concentrations of stress are suppressed.

Note that the dimensions, such as the height of the projections and the interval (pitch) between the projections that is described later and the like, in the present embodiment are measured by using, as an example, the One-Shot 3D Measuring Macroscope VR-3000 series by Keyence Corporation.

### [Second Asterisk Projections 36]

As shown in Fig. 3, the second asterisk projections 36 have shapes that are similar to those of the first asterisk projections 34. Concretely, as seen from the direction orthogonal to the base surface 40, the second asterisk projection 36 is a shape in which the first asterisk projection 34 is rotated 90 [degrees] clockwise around the center O1, and moreover, is rotated 90 [degrees] clockwise around the center O1 so that the top and bottom of the first asterisk projection 34 are reversed.

At the second asterisk projection 36, the portions that correspond to the first extending portions 35A-1, 35A-2, the second extending portions 35B-1, 35B-2, the third extending portions 35C-1, 35C-2 and the center O1 of the first asterisk projection 34 are called first extending portions 37A-1, 37A-2, second extending portions 37B-1, 37B-2, third extending portions 37C-1, 37C-2 and center 02. Hereinafter, these six extending portions are collectively called "extending portions 36E".

Further, at the second asterisk projection 36, the portion that corresponds to the peak surface 34C of the first asterisk projection 34 is called a peak surface 36C. Moreover, at the second asterisk projection 36, the portions that correspond to the side surfaces 34D of the first asterisk projection 34 are called side surfaces 36D (see Fig. 4).

### [Other Points]

As shown in Fig. 2(C), the first asterisk projections 34 and the second asterisk projections 36 are disposed alternately in the tire circumferential direction and the tire radial direction, and fill-up the entire first low brightness region 21.

As shown in Fig. 3, the respective distal ends of the first extending portions 35A-1, 35A-2 of the first asterisk projections 34 are inserted respectively between the second extending portions 37B-2 and the third extending portions 37C-1, and between the second extending portions 37B-1 and the third extending portions 37C-2, of the second asterisk projections 36 that are adjacent thereto in the tire radial direction. Further, the respective distal ends of the first extending portions 37A-1, 37A-2 of the second asterisk projections 36 are inserted respectively between the second extending portions 35B-1 and the third extending portions 35C-2, and between the second extending portions 35B-2 and the third extending portions 35C-1, of the first asterisk projections 34 that are adjacent thereto in the tire circumferential direction.

Moreover, the distal ends of the third extending portions 35C-1 of the first asterisk projections 34, and the distal ends of the second extending portions 37B-1 of the second asterisk projections 36 that are disposed at the tire radial direction outer sides of the first asterisk projections 34, are connected to one another. Connecting portions 34A are thereby formed. Moreover, the distal ends of the second extending portions 35B-1 of the first asterisk projections 34, and the distal ends of the third extending portions 37C-1 of the second asterisk projections 36 that are disposed at the tire circumferential direction one sides of the first asterisk projections 34, are connected to one another. Connecting portions 34B are thereby formed.

In this structure, the first asterisk projections 34 and the second asterisk projections 36 are connected to one another in the form of steps via the connecting portions 34A, 34B, from the tire radial direction inner side toward the outer side.

Further, at the first asterisk projections 34 and the second asterisk projections 36 that are adjacent to one another in the tire radial direction and the tire circumferential direction, the interval between the center O1 and the center O2 (hereinafter the "interval P") is a value that is determined in advance and that is from 0.1 [mm] to 1.0 [mm]. If the interval P is less than 0.1 [mm], molding of the projections is difficult. Moreover, if the interval P is larger than 1.0 [mm], there is the concern that the brightness cannot be lowered to the extent of being seen as black by damping the incident light. Note that the interval P at the second low brightness regions 22 may be set to be greater than 0.5 [mm], within the aforementioned range. This is because the range of expression of the decorative portion 14 can be further broadened.

Here, at the first low brightness region 21 and the second low brightness regions 22, which appear black and are described in the present embodiment, the value of brightness L* measured by using the Handy Spectrophotometer (NF333) of Nippon Denshoku Industries Co., Ltd. is in the region of less than 10, as an example. The range of the brightness L* is 0 to 100, and, the closer to 0, the more black the appearance, and, the closer to 100, the more white the appearance. Further, at the medium brightness regions 16 that appear gray, the value of the brightness L* is in the region of from 10 to 20, as an example. Namely, the medium brightness regions 16 that appear gray are regions whose brightness is a relatively medium level at the outer surface of the tire 10. At the another region 18 that is other than the decorative portions 14 at the tire side portion 12, the value of the brightness L* is greater than 20, as an example.

### (Third Low Brightness Region 23)

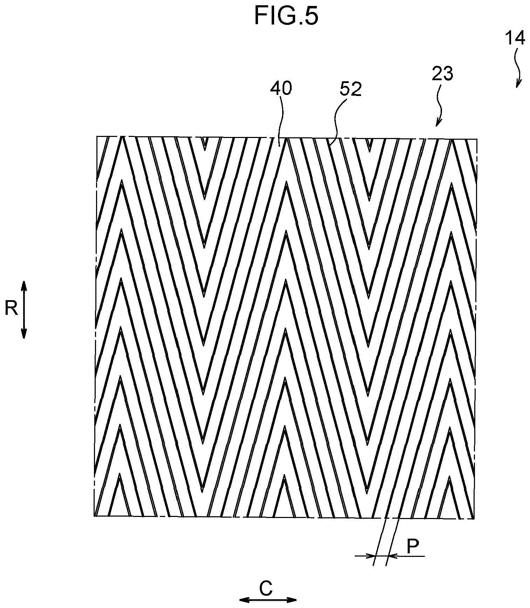

The third low brightness region 23 that is shown in Fig. 1 expresses the alphabet letter "A" for example. As shown in Fig. 5, the third low brightness region 23 is structured by plural rib-shaped projections 52 that are examples of the projections. The rib-shaped projections 52 are formed as V-shaped units at the base surface 40 of the decorative portion 14. The rib-shaped projections 52 are, for example, formed in zigzag shapes by being connected to one another in the tire circumferential direction. Further, a plurality of the zigzag rib-shaped projections 52 are formed in the tire radial direction. The cross-sectional shape of the rib-shaped projection 52, and the interval P between the center of one of the rib-shaped projections 52 and the center of another of the rib-shaped projections 52 among the rib-shaped projections 52 that are adjacent to one another, are similar to the cross-sectional shape and the interval P of the first asterisk projections 34 and the second asterisk projections 36 that are shown in Fig. 4. An arbitrary letter, shape, symbol, pattern or the like can be expressed by the third low brightness region 23, within the range of the first low brightness region 21. Further, surfaces that are orthogonal to and surfaces that are parallel to the angle of incidence of the light are formed alternately by the rib-shaped projections 52. Due thereto, striped light and dark can be expressed at the decorative portion 14.

### (Medium Brightness Regions 16)

In Fig. 2(A), at the medium brightness regions 16, the interval between the first asterisk projections 34 and the second asterisk projections 36 is set to be greater than 1 [mm],

### (Operation, Effects)

Operation/effects of the tire relating to the present embodiment are described next.

At the decorative portion 14 of the tire side portion 12, the light that is incident on the first asterisk projections 34 and the second asterisk projections 36 that are formed at the first low brightness region 21, the second low brightness regions 22 and the third low brightness region 23 hits the side surfaces 34D, 36D that are shown in Fig. 4. Further, the incident light is damped while reflecting thereof is repeated between the side surfaces 34D, 36D that face one another, and is reflected to the outer side.

Further, at the medium brightness regions 16 of the decorative portion 14 of the tire side portion 12, the light that is incident on the first asterisk projections 34 and the second asterisk projections 36 that are formed at the medium brightness regions 16 also similarly is damped while reflecting thereof is repeated between the side surfaces 34D, 36D that face one another, and is reflected to the outer side.

Moreover, at the another region 18 where the projections are not formed of the tire side portion 12, the light that is incident on the another region 18 is reflected to the outer side by the outer surface that structures the another region 18.

Here, the interval P between the first asterisk projections 34 and the second asterisk projections 36 that are formed at the first low brightness region 21 and the second low brightness regions 22, and the interval P between the rib-shaped projections 52 that are formed at the third low brightness region 23, are respectively values that are determined in advance and that are from 0.1 [mm] to 1.0 [mm]. In these low brightness regions, the brightness is low as compared with at the another region 18 where projections are not formed. Further, at the respective low brightness regions, because the intervals between the projections differ from one another, the brightnesses are gradually varied, and gradation can be expressed. At at least one of the low brightness regions, due to the interval P between adjacent projections being made to be greater than 0.5 [mm], the brightness can be made to be bright as compared with at regions where the interval between adjacent projections is less than or equal to 0.5 [mm]. In this way, the range of expression of the decorative portion 14 that has regions where projections are formed at the tire 10 can be broadened.

Further, the interval P between the first asterisk projection 34 and the second asterisk projection 36 that are formed at the medium brightness regions 16 is a value that is set in advance and that is greater than 1.0 [mm]. Namely, the density of the projections that are formed at the medium brightness regions 16 is low as compared with the densities of the projections that are formed at the first low brightness region 21, the second low brightness regions 22 and the third low brightness region 23.

Moreover, because the apex angles of the respective projections are similar, the regions, which the base surface 40 occupies per unit surface area at the medium brightness regions 16, is large as compared with the regions that the base surface 40 occupies per unit surface area at the first low brightness region 21, the second low brightness regions 22 and the third low brightness region 23.

Due thereto, the amount of light that is reflected to the outer side at the medium brightness regions 16 is large as compared with the amounts of light that are reflected to the outer side at the first low brightness region 21, the second low brightness regions 22 and the third low brightness region 23. Moreover, the amount of light that is reflected to the outer side at the medium brightness regions 16 is small as compared with the amount of light that is reflected to the outer side at the another region 18 at which projections are not formed. Namely, the brightness L* of the third low brightness region 23, the first low brightness region 21, the second low brightness regions 22, the medium brightness regions 16 and the another region 18 become higher in that order.

Therefore, the first low brightness region 21, the second low brightness regions 22 and the third low brightness region 23 appear black relatively, and the another region 18 appears white relatively, and the medium brightness region 16 appears gray relatively. Due thereto, the brightness is gradually varied in stages, and better gradation can be expressed. Further, at the second low brightness region 22 and the medium brightness region 16 that are adjacent to one another, by setting the ratio of the intervals P of the projections to be from 1.0 to 3.0, the gradual variation in the brightness is easy to see.

By providing the medium brightness regions 16 in addition to the first low brightness region 21, the second low brightness regions 22 and the third low brightness region 23, the range of expression of the decorative portion 14 can be broadened as compared with a case in which only the above-described low brightness regions are formed. In other words, the manners of expression can be increased.

Further, in Fig. 3, the respective extending portions 34E of the first asterisk projections 34 extend in different directions, and the respective extending portions 36E of the second asterisk projections 36 extend in different directions Due thereto, even when the decorative portion 14 is viewed while the angle of viewing thereof is changed, the appearance differing can be suppressed.

Further, the first asterisk projections 34 are structured by the extending portions 34E that extend out in respectively different directions and six of which are connected at the center O1. The second asterisk projections 36 are structured by the extending portions 36E that extend out in respectively different directions and six of which are connected at the center 02. Accordingly, it is difficult for the first asterisk projections 34 and the second asterisk projections 36 respectively to collapse, and the durability of the first asterisk projections 34 and the second asterisk projections 36 respectively can be improved.

Further, the first asterisk projections 34 and the second asterisk projections 36 are connected in the form of steps via the connecting portions 34A, 34B. Due thereto, the first asterisk projections 34 and the second asterisk projections 36 support one another via the connecting portions 34A, 34B, and collapsing-in of the first asterisk projections 34 and the second asterisk projections 36 is suppressed. Therefore, the durability can be improved.

### <Second Embodiment>

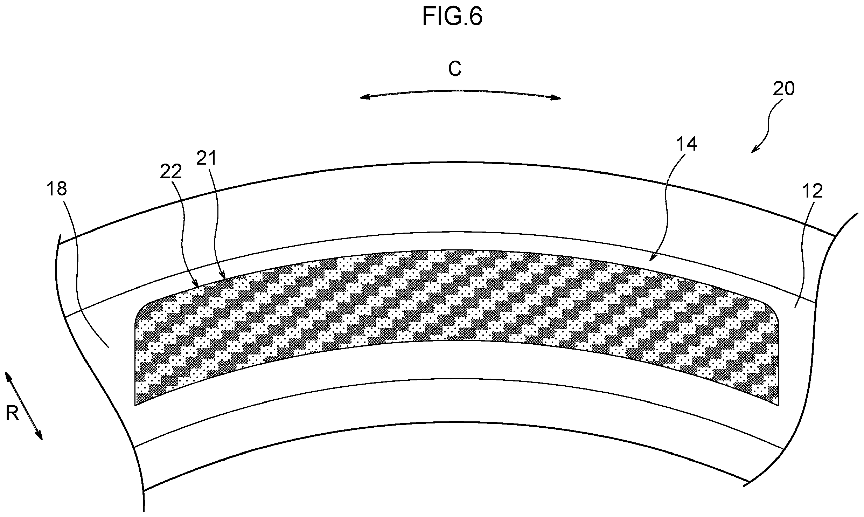

In Fig. 6, at a tire 20 relating to a second embodiment in the present invention, the first low brightness regions 21 and the second low brightness regions 22 that are formed in rectangular shapes are disposed in series respectively in the form of steps, in directions intersecting the tire radial direction. Further, the first low brightness regions 21 and the second low brightness regions 22 are disposed alternately in the tire circumferential direction. A zigzag pattern can be seen at the decorative portion 14 due to the difference in brightnesses between the first low brightness regions 21 and the second low brightness regions 22.

Operation of the second embodiment, and the detailed structures of the first low brightness regions 21 and the second low brightness regions 22, are similar to the first embodiment, and therefore, description thereof is omitted.

### <Third Embodiment>

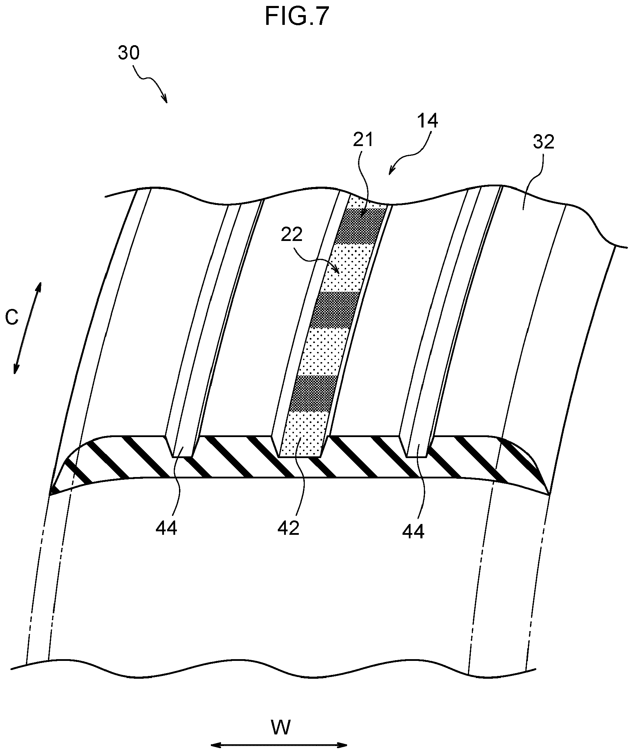

In Fig. 7, at a tire 30 relating to the third embodiment in the present invention, the decorative portion 14 is formed at a tread 32 of the tire 30. Concretely, plural circumferential direction grooves 42, 44 that extend in the tire circumferential direction are formed in the tread 32 of the tire 30 so as to be apart in the tire width direction (arrow W in the drawing). The circumferential direction groove 42 is provided at the tire width direction central portion, and the circumferential direction grooves 44 are provided at the tire width direction both sides of the circumferential direction groove 42, respectively. The decorative portion 14 is formed at the circumferential direction groove 42 that is at the tire width direction central portion and serves as an example of the tire outer surface. At the decorative portion 14, the first low brightness regions 21 and the second low brightness regions 22, which serve as examples of plural first patterns, are disposed alternately in the tire circumferential direction for example. In this way, by providing the decorative portion 14 at the circumferential direction grooves 42, the range of expression at the tread 32 can be broadened.

Note that a second pattern region may be provided in addition to the first pattern region. Further, the arrangement of the respective pattern regions is arbitrary. The respective pattern regions may be lined-up, for example, in the tire width direction, or in an inclined direction that intersects the tire width direction.

The detailed structures of the first low brightness regions 21 and the second low brightness regions 22 are similar to the first embodiment, and therefore, description thereof is omitted.

### <Other Embodiments>

Note that embodiments relating to the present invention are not limited to the above-described respective embodiments, and it will be clear to those skilled in the art that various other embodiments are possible within the scope of the present invention as defined by the appended claims. For example, although the third low brightness region 23 is provided as the second pattern region, such a second pattern region does not have to be provided.

The apex angles of the projections such as the first asterisk projections 34 and the second asterisk projections 36 and the like (e.g., D in Fig. 4) are 26 [degrees], but may be another angle. If the apex angle D is large, the proportion of the reflected light, which is reflected at the side surfaces 34D, 36D, that returns in the incident direction is large, and the brightness L* is relatively higher.

## Claims

1. A tire (10), comprising:
a decorative portion (14) that is formed at a tire outer surface and has a base surface (40); and
a plurality of first pattern regions at which a plurality of projections (34, 36), which project out from the base surface of the decorative portion at a projecting height of from 0.1 mm to 1.0 mm, are formed at intervals of from 0.1 mm to 1.0 mm,
wherein the intervals differ from one first pattern region to a next first pattern region, **characterized in that**:
a plurality of projections within each first pattern region are connected to one another.

2. The tire of claim 1, wherein, as seen from a direction orthogonal to the base surface, the projections are formed to include extending portions (34E) which extend in a plurality of directions from a base point.

3. The tire of claim 1 or 2, wherein, at at least one of the first pattern regions, an interval between the projections that are adjacent to one another is greater than 0.5 mm.

4. The tire of any one of claim 1 through claim 3, wherein, at the first pattern regions that are adjacent to one another, a ratio of the intervals between the projections is from 1.1 to 3.0.

5. The tire of any one of claim 1 through claim 4, comprising second pattern regions that are disposed in a vicinity of the first pattern regions at the decorative portion, and at which a plurality of the projections are formed at intervals of greater than 1 mm.

6. The tire of claim 5, wherein, at the first pattern region and the second pattern region that are adjacent to one another, a ratio of intervals between the projections is from 1.1 to 3.0.

## Patentansprüche

1. Reifen (10), Folgendes umfassend:
einen dekorativen Abschnitt (14), der an einer Reifenaußenfläche ausgebildet ist und eine Basisfläche (40) aufweist; und
eine Vielzahl von ersten Musterbereichen, an denen in Abständen von 0,1 mm bis 1,0 mm eine Vielzahl von Vorsprüngen (34, 36) ausgebildet sind, die mit einer Vorsprungshöhe von 0,1 mm bis 1,0 mm aus der Basisfläche des dekorativen Abschnitts herausragen,
wobei sich die Abstände von einem ersten Musterbereich zu einem nächsten ersten Musterbereich unterscheiden,
**dadurch gekennzeichnet, dass**:
eine Vielzahl von Vorsprüngen innerhalb jedes ersten Musterbereichs miteinander verbunden sind.

2. Reifen nach Anspruch 1, wobei die Vorsprünge, von einer Richtung senkrecht zur Basisfläche aus gesehen, so geformt sind, dass sie sich erstreckende Abschnitte (34E) einschließen, die sich von einem Basispunkt aus in eine Vielzahl von Richtungen erstrecken.

3. Reifen nach Anspruch 1 oder 2, wobei in mindestens einem der ersten Musterbereiche ein Abstand zwischen den aneinander angrenzenden Vorsprüngen größer als 0,5 mm ist.

4. Reifen nach einem der Ansprüche 1 bis 3, wobei in den ersten Musterbereichen, die einander angrenzen, ein Verhältnis der Abstände zwischen den Vorsprüngen zwischen 1,1 und 3,0 liegt.

5. Reifen nach einem der Ansprüche 1 bis 4, der zweite Musterbereiche umfasst, die in der Nähe der ersten Musterbereiche an dem dekorativen Abschnitt angeordnet sind und an denen eine Vielzahl der Vorsprünge in Abständen von mehr als 1 mm ausgebildet ist.

6. Reifen nach Anspruch 5, wobei in dem ersten Musterbereich und dem zweiten Musterbereich, die einander angrenzen, ein Verhältnis der Abstände zwischen den Vorsprüngen zwischen 1,1 und 3,0 liegt.

## Revendications

1. Bandage pneumatique (10) comprenant :
une partie décorative (14) formée sur une surface extérieure du bandage pneumatique et comportant une surface de base (40) ; et
une pluralité de premières régions de motif au niveau desquelles sont formées, à intervalles de 0,1 mm à 1,0 mm, une pluralité de saillies (34, 36) qui font saillie depuis la surface de base de la partie décorative à une hauteur de saillie de 0,1 mm à 1,0 mm,
dans lequel les intervalles diffèrent d'une première région de motif à une première région de motif suivante,
**caractérisé en ce que** :
une pluralité de saillies à l'intérieur de chaque première région de motif sont connectées les unes aux autres.

2. Bandage pneumatique selon la revendication 1, dans lequel, vues d'une direction orthogonale à la surface de base, les saillies sont formées pour inclure des portions d'extension (34E) qui s'étendent dans une pluralité de directions à partir d'un point de base.

3. Bandage pneumatique selon la revendication 1 ou 2, dans lequel, au niveau d'au moins une des premières régions de motif, un intervalle entre les saillies qui sont adjacentes les unes aux autres est supérieur à 0,5 mm.

4. Bandage pneumatique selon l'une quelconque des revendications 1 à 3, dans lequel, au niveau des premières régions de motif qui sont adjacentes l'une à l'autre, un rapport des intervalles entre les saillies est compris entre 1,1 et 3,0.

5. Bandage pneumatique selon l'une quelconque des revendications 1 à 4, comprenant des secondes régions de motif qui sont disposées à proximité des premières régions de motif au niveau de la partie décorative, et au niveau desquelles une pluralité de saillies sont formées à des intervalles de plus de 1 mm.

6. Bandage pneumatique selon la revendication 5, dans lequel, au niveau de la première région de motif et de la seconde région de motif qui sont adjacentes l'une à l'autre, un rapport d'intervalles entre les saillies est compris entre 1,1 et 3,0.
